(19) **Europäisches Patentamt / European Patent Office / Office européen des brevets**

(11) **EP 2 240 756 B1**

(12) # FASCICULE DE BREVET EUROPEEN

(45) Date de publication et mention de la délivrance du brevet:
**07.11.2018 Bulletin 2018/45**

(21) Numéro de dépôt: **09717119.3**

(22) Date de dépôt: **04.02.2009**

(51) Int Cl.:
*G01N 1/22* *(2006.01)* *B01D 53/22* *(2006.01)*
*B01D 53/26* *(2006.01)* *B01D 63/08* *(2006.01)*
*G01N 1/40* *(2006.01)*

(86) Numéro de dépôt international:
**PCT/FR2009/000124**

(87) Numéro de publication internationale:
**WO 2009/109725 (11.09.2009 Gazette 2009/37)**

(54) **DISPOSITIF DE SECHAGE D'UN GAZ, NOTAMMENT DE L'AIR, ET SON APPLICATION A UN DISPOSITIF ET PROCEDE DE PRELEVEMENT D'UN ECHANTILLON DE GAZ.**

VORRICHTUNG ZUM TROCKNEN EINES GASES, INSBESONDERE LUFT, VERBRINGEN DAVON ZU EINER VORRICHTUNG UND VERFAHREN ZUM SAMMELN EINER GASPROBE

DEVICE FOR DRYING A GAS, IN PARTICULAR AIR, APPLICATION THEREOF TO A DEVICE, AND METHOD FOR COLLECTING A GAS SAMPLE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **08.02.2008 FR 0800669**
**30.09.2008 FR 0805367**

(43) Date de publication de la demande:
**20.10.2010 Bulletin 2010/42**

(73) Titulaire: **R + I Alliance**
**75009 Paris (FR)**

(72) Inventeurs:
• **VALOR HERENCIA, Ignacio**
**Alicante (ES)**
• **JUAREZ GALAN, Juan Manuel**
**Alicante (ES)**

(74) Mandataire: **IPAZ**
**16, rue Gaillon**
**75002 Paris (FR)**

(56) Documents cités:
WO-A1-99/67621   WO-A1-2006/049434
US-A- 3 735 559   US-A- 4 600 559
US-A- 4 612 019   US-A1- 2006 021 615

Printed by Jouve, 75001 PARIS (FR)

**Description**

L'invention est relative à un dispositif de séchage d'un gaz , en particulier d'air, pouvant contenir divers composés gazeux, le séchage devant permettre d'extraire la majeure partie de la vapeur d'eau présente dans le gaz, sans éliminer certains des autres composés présents, ou sans en modifier la teneur.

Le dispositif de séchage concerné est du genre de ceux qui comprennent au moins une chambre, avec une entrée pour un courant de gaz à traiter et une sortie pour le courant de gaz traité, cette chambre étant limitée par au moins une membrane dont la perméabilité à la vapeur d'eau est nettement supérieure à sa perméabilité à l'égard des autres gaz ou vapeurs, un matériau absorbant l'humidité étant disposé, ou circulant, contre la membrane du côté opposé à la chambre, la surface de la chambre et de la membrane étant déterminée, en tenant compte du débit de gaz et de sa teneur présumée en vapeur d'eau, pour assurer une dessiccation suffisante du courant de gaz entre l'entrée et la sortie du dispositif.

US 2006/0021615 (D1) montre un dispositif de séchage de ce genre. D1 décrit un empilement de chambres positionnées en parallèle (voir figure 7 de ce document). Il est souhaitable d'améliorer l'efficacité d'un tel dispositif, et de faciliter sa construction et son exploitation.

US 3 735 559 (D2) décrit aussi un dispositif de séchage de gaz humide qui utilise une ou plusieurs membranes sélectives 11 laissant passer essentiellement la vapeur d'eau. Comme illustré sur Fig. 3 et 4 de D2, le gaz humide entre dans un collecteur 19 et pénètre, par des orifices transversaux 22, dans une chambre 21 limitée, d'un côté, par une membrane 11 sélective et de l'autre par une plaque 13 traversée par les passages 22. De l'autre côté de la membrane 11, se trouve une chambre 23 dans laquelle circule un gaz de balayage. Les chambres 21 et 23 sont définies, selon leur périmètre, par des joints 24, 26 maintenus en place par un adhésif (voir colonne 3, lignes 63-68). Ainsi, selon D2, les chambres 21 recevant le gaz humide à sécher sont limitées d'un seul côté par une membrane 11. Le maintien de la membrane sur sa périphérie est assuré par des joints 24, 26 collés par un adhésif. Selon D2, les chambres peuvent être connectées soit en parallèle, soit en série (colonne 4, lignes 6-10).

L'invention concerne plus particulièrement un dispositif de séchage d'air contenant des composés organiques volatils (COV) ou des composés odoriférants que l'on souhaite analyser. Plus généralement, l'invention concerne toute application pour laquelle il est nécessaire d'avoir un débit de gaz sans humidité (analyses chromatographiques, spectrométrie de masse, piles à combustibles, échantillonnages de gaz polaires,...).

L'analyse de composés gazeux, présents dans un gaz principal porteur, notamment de l'air, fait généralement appel à des procédés qui ne supportent pas, ou qui supportent mal, une présence sensible de vapeur d'eau. C'est le cas notamment pour la chromatographie en phase gazeuse, ou pour la spectrométrie de masse.

Il est souhaitable en outre que le dispositif de séchage permette un traitement rapide et continu du gaz, dans des conditions simples à mettre en oeuvre.

L'invention a donc pour but de fournir un dispositif de séchage d'un gaz qui, tout en étant d'une réalisation simple, permet d'effectuer un traitement dynamique, c'est-à-dire sur un courant de gaz, au lieu d'un traitement statique, tout en ayant une bonne efficacité et en étant d'une mise en oeuvre rapide.

Selon l'invention, le dispositif de séchage d'un gaz, en particulier d'air, du genre défini précédemment, est caractérisé en ce qu'il comporte :

- un empilage de plaques munies d'ouvertures centrales, à l'exception des plaques extrêmes qui sont fermées,
- chaque chambre est formée par une ouverture centrale prévue dans une plaque, cette ouverture centrale étant comprise entre deux membranes parallèles, tandis que le matériau absorbant l'humidité est prévu contre les membranes du côté opposé à la chambre, un canal d'entrée de gaz et un canal de sortie traversant la paroi de la plaque qui entoure l'ouverture centrale,
- chaque plaque définissant une chambre pour le passage du gaz est prise en sandwich entre deux plaques comportant un logement pour le matériau absorbant l'humidité,
- et plusieurs chambres sont empilées, et reliées en série.

Avantageusement, des moyens d'étanchéité sont prévus entre les différentes plaques empilées.

Les plaques peuvent être circulaires, sous forme de couronnes ou de disques. Cinq chambres peuvent être prévues en série. Les plaques de l'empilage peuvent être réalisées en matière plastique, en particulier en polytétrafluoroéthylène.

De préférence, la membrane est constituée par une membrane polymérique, en particulier en PET (polyéthylène-téréphtalate), plus particulièrement en PET connu sous le nom commercial « Nalophan », qui est fourni sous forme de film par la société KALLE GmbH (Allemagne).

Le matériau absorbant l'humidité peut être formé par du silica gel (SG). En variante, le matériau absorbant l'humidité comprend un gaz sec en circulation. D'autres matériaux absorbant l'humidité peuvent être utilisés, notamment les zéolites.

De préférence, chaque plaque définissant une chambre pour le passage du gaz est prise en sandwich entre deux plaques comportant un logement pour le matériau absorbant l'humidité.

Avantageusement, l'empilage de plaques est maintenu assemblé à l'aide de moyens de serrage, les plaques comportant, sur leur périphérie, des oreilles en saillie radiale traversées par des trous, le maintien de l'empilage étant obtenu à l'aide de vis traversant des trous alignés. Les oreilles sont décalées angulairement pour permettre de placer l'épaisseur d'un écrou entre deux plaques, définissant une chambre pour le passage du gaz, séparées par une plaque comportant un logement pour le matériau absorbant l'humidité, ou entre deux plaques comportant un logement pour le matériau absorbant l'humidité séparées par une plaque définissant une chambre pour le passage du gaz..

L'invention est également relative à l'utilisation du dispositif de séchage de gaz, défini précédemment, dans un dispositif de prélèvement d'un échantillon de gaz dans un environnement, en particulier pour une analyse des composés organiques volatils (COV) ou des odeurs, pendant une période de temps déterminée, dispositif du genre de ceux qui comprennent un tube de prélèvement conduisant à un récipient de stockage de l'échantillon, et un moyen de fermeture du récipient après prélèvement.

L'invention concerne plus particulièrement, mais non exclusivement, un tel dispositif de prélèvement pour effectuer des mesures de COV ou d'odeurs dans des, ou au voisinage de, stations d'épuration d'eaux usées, usines chimiques, décharges...

Traditionnellement, un prélèvement ponctuel de gaz à un endroit donné est réalisé dans un sac dont le volume peut aller de 20 à 60 litres. L'échantillon ainsi prélevé constitue une "photo" instantanée de l'air ambiant. Cet échantillon est ensuite analysé en laboratoire. Les odeurs peuvent être évaluées par olfactométrie, avec un jury de nez (opérateurs qualifiés pour une appréciation des odeurs). D'autres types d'analyses, par exemple, par chromatographie en phase gazeuse sont également possibles.

L'échantillon prélevé dans un sac ne doit pas être conservé trop longtemps avant l'analyse car les produits prélevés peuvent évoluer avec le temps. Des normes limitent ainsi le temps entre le prélèvement et l'analyse, de sorte que la distance entre le laboratoire d'analyse et le lieu de prélèvement ne doit pas être trop élevée pour que le temps de transport de l'échantillon reste inférieur à la limite fixée.

En outre, du fait du volume limité des sacs de prélèvement, il est difficile d'effectuer un prélèvement en continu d'échantillons de gaz pendant une durée relativement longue.

Il existe d'autres méthodes d'échantillonnage, que l'on répartit en trois groupes :

- L'échantillonnage par adsorption sur lit adsorbant (charbon actif, zéolite, Tenax, XAD, etc...) ; cette méthode présente l'inconvénient d'être sélective, d'être non compatible avec certains composés et d'être instable en présence d'humidité.
- L'échantillonnage par stockage dans des conteneurs appropriés ; les parois doivent être inertes (Tedlar ®, Nalophan, Teflon ®...).
- L'échantillonnage par tubes absorbants ; les composés sont retenus sur des réactifs, mais ces réactifs sont sélectifs et la mesure ne peut être totale.

L'invention a pour but, surtout, d'assurer un prélèvement d'échantillon de gaz, dans un environnement, en continu pendant un temps relativement long, tout en conservant les qualités de l'échantillon, sous un volume réduit. En particulier, on souhaite pouvoir effectuer un prélèvement en continu sur plusieurs jours, notamment cinq à sept jours. Il est souhaitable, en outre, que le dispositif de prélèvement permette le transport à distance de l'échantillon, sans altérer ses propriétés

L'utilisation du dispositif de séchage de gaz, défini précédemment, dans un dispositif de prélèvement d'échantillon de gaz dans un environnement, en particulier pour une analyse des COV ou des odeurs, pendant une période de temps déterminée, est caractérisée en ce que :

- ledit dispositif de séchage de gaz étant disposé sur le tube de prélèvement, en amont du récipient de stockage,
- et un moyen de refroidissement du récipient de stockage est prévu pour refroidir et maintenir le récipient à une température suffisamment basse pour condenser, sous forme liquide et/ou solide, au moins les composants gazeux à analyser dans l'échantillon.

Le moyen de refroidissement peut être formé par un bain de gaz liquéfié dont la température d'ébullition à pression atmosphérique est inférieure au moins à celle des composants gazeux autres que l'azote et l'oxygène, le récipient étant plongé dans le bain de gaz liquéfié et constituant un condenseur. Le moyen de refroidissement est avantageusement formé par un bain d'azote liquide.

Le condenseur peut être réalisé en métal, notamment en acier inoxydable ou en titane, sous une forme cylindrique. La face intérieure de la paroi du condenseur est avantageusement revêtue d'une couche de protection constituée d'un dépôt de polytétrafluoroéthylène (PTFE), ou d'un dépôt de silane (SULFINERT/SILTEK de RESTEK),.

Le condenseur peut comporter une cloison interne s'étendant suivant un diamètre de la section du condenseur, la cloison séparant, en partie haute, l'orifice d'arrivée et l'orifice de sortie, le bord inférieur de la cloison se trouvant à distance au-dessus du fond du condenseur de sorte qu'un passage inférieur existe entre deux chambres déterminées par la cloison, l'axe géométrique du condenseur étant vertical lors du prélèvement.

De préférence, un régulateur du débit de gaz prélevé est disposé sur le tube de prélèvement pour maintenir le débit sensiblement constant pendant toute la durée de prélèvement.

Le dispositif de prélèvement est prévu pour permettre un prélèvement continu pendant une durée pouvant aller jusqu'à sept jours.

L'invention est également relative à un procédé pour la restitution d'un échantillon de gaz prélevé par un dispositif tel que défini précédemment, et dont les COV ou l'odeur est à analyser, ce procédé étant caractérisé en ce que :

- dans le cas d'un échantillon prélevé à proximité d'une source d'émission de COV ou d'odeurs, la reconstitution est effectuée par échauffement de l'échantillon à la température ambiante, l'échantillon étant restitué sous son volume initial, ou dilué sous un plus grand volume,

- dans le cas d'un échantillon prélevé à distance d'une source d'émission de COV ou d'odeurs, la reconstitution comporte une étape de concentration des composés volatils autres que l'azote et l'oxygène.

Avantageusement, l'étape de concentration des composés volatils autres que l'azote et l'oxygène comprend une distillation sous vide pour évaporation de l'azote et de l'oxygène. Les composés organiques volatils éventuellement balayés par l'azote et l'oxygène évaporés peuvent être condensés dans un piège froid.

La distillation peut être effectuée selon une technique basée sur des impulsions pression-expansion, de sorte qu'à chaque impulsion, le condenseur est mis sous pression avec de l'air ou de l'azote, sous une pression déterminée, optimale pour le système, suivie d'une brutale expansion, par chute de la pression.

La distillation sous vide est arrêtée lorsque le volume évaporé mesuré correspond à la presque totalité, en particulier 99%, du volume de l'échantillon prélevé.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :

Fig.1 est un schéma en coupe d'un dispositif de séchage de gaz selon l'invention.

Fig.2 est une vue en perspective éclatée d'une réalisation du dispositif de séchage de gaz.

Fig. 3 est un schéma d'un dispositif de prélèvement d'échantillon de gaz selon l'invention.

Fig. 4 est un schéma du procédé de restitution d'un échantillon de gaz prélevé.

Fig.5 est un schéma illustrant une variante du procédé de restitution de Fig. 4.

Fig.6 est une vue illustrant une autre variante du procédé de restitution.

Fig.7 est une coupe schématique verticale avec parties en extérieur d'un condenseur pour le dispositif selon l'invention et

Fig. 8 montre, semblablement à Fig. 7, une variante possible du condenseur.

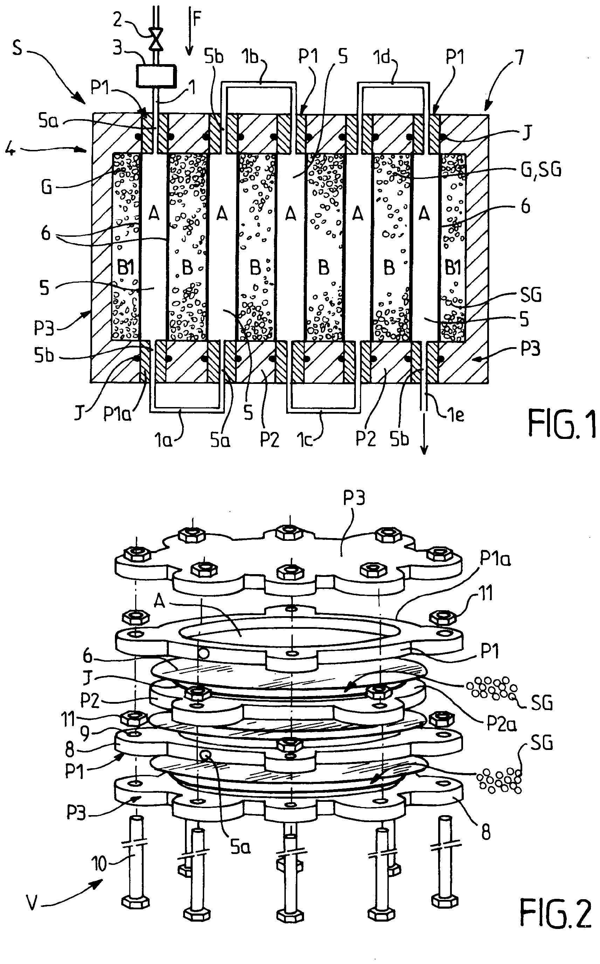

En se reportant à Fig. 1 du dessin, on peut voir un dispositif de séchage ou de dessiccation S d'un gaz constitué, dans l'exemple considéré, par de l'air chargé de composés organiques volatils, désignés en abrégé par COV, sous forme gazeuse. L'air, ou plus précisément le mélange gazeux air et COV, est introduit dans le dispositif S par un tube 1, selon un sens d'écoulement schématisé par une flèche F. Les termes « amont » et « aval » sont à comprendre selon ce sens d'écoulement. Une vanne 2 est généralement disposée sur le tube 1 en amont du dispositif S et un filtre 3 est généralement prévu pour retenir des particules solides éventuellement présentes dans le gaz à analyser.

Le dispositif de séchage S est formé par un moyen de dessiccation 4 disposé sur le tube 1 en aval du filtre 3. Ce moyen de dessiccation 4 comprend une ou plusieurs chambres 5, notamment cylindriques, reliées en séries par des coudes 1a, 1b, 1c, 1d de tube.

Les chambres 5 sont formées par des ouvertures centrales A prévues dans des plaques P1 parallèles, les ouvertures A débouchant sur chacune des faces parallèles des plaques P1. Chaque ouverture centrale A est entourée par une paroi périphérique P1a à contour fermé. Ce contour P1a est traversé par un canal d'entrée 5a d'axe parallèle au plan des grandes faces ouvertes de la plaque P1 et, à l'opposé, un canal de sortie 5b traverse le contour périphérique. Le canal de sortie 5b de la dernière plaque P1 de l'empilage est relié à un tube de sortie 1e. La section droite des chambres 5 est supérieure à celle du tube 1.

Au moins une paroi de la chambre 5, et de préférence les deux parois parallèles aux grandes faces de la plaque P1, sont formées par une membrane polymère 6, en particulier en PET (polyéthylènetéréphtalate), plus particulièrement celui connu sous la dénomination commerciale « Nalophan ». La membrane 6 est généralement constituée par un film d'une épaisseur de l'ordre de 20 $\mu$m. Une couche G de matériau absorbant l'humidité est disposée contre la membrane 6 du côté opposé à la chambre 5. La couche G est avantageusement formée de silica gel SG, par exemple sous forme de granulés. Le gradient de la concentration en vapeur d'eau est ainsi maintenu maximum de part et d'autre de la membrane 6, pour favoriser la perméation de la vapeur d'eau.

La couche G est avantageusement logée dans une chambre B formée par une ouverture centrale prévue dans une plaque P2 à faces parallèles, l'ouverture débouchant sur chacune des faces de la plaque P2. La chambre B est ainsi entourée par un contour périphérique fermé P2a. Chaque chambre B est limitée par deux membranes 6 correspondant à deux chambres 5 successives.

Un empilage de plaques P1, P2 est ainsi formé. Les deux plaques d'extrémité P3 sont fermées, mais comportent une cavité centrale B1 tournée vers la membrane 6 voisine, cette cavité B1 étant remplie de matériaux absorbant l'humidité, notamment de silica gel SG (Fig.2).

L'empilage, comme visible sur Fig. 2, peut être maintenu assemblé à l'aide de moyens de serrage V. Des joints J sont prévus entre les plaques successives de l'empilage pour entourer de manière étanche les chambres 5. Les plaques P1, P2 et P3 sont avantageusement réalisées en une matière plastique résistant aux agents corrosifs, notamment en polytétrafluoroéthylène (PTFE). L'ensemble des plaques forme une enveloppe 7.

Selon l'exemple de Fig. 1, cinq chambres successives 5 sont prévues en série, situées dans cinq plaques P1, séparées par quatre plaques P2, avec deux plaques P3 d'extrémité, soit au total onze plaques.

Avantageusement, les plaques ont une forme circulaire et constituent des couronnes ou des disques comme illustré sur Fig. 2. Sur cette Fig.2 n'ont été représentées que deux plaques P1, une plaque P2, et les deux plaques d'extrémité P3. Il faut comprendre qu'entre la plaque supérieure P1 de Fig. 2 et la plaque supérieure P3 une succession de plaques P2, P1 n'a pas été représentée pour simplifier.

Selon la réalisation de Fig. 2, les plaques circulaires comportent, sur leur périphérie, des oreilles 8 en saillie radiale traversées par des trous 9. Le maintien de l'empilage est obtenu à l'aide de moyens de serrage V qui comprennent des vis 10 traversant des trous 9 alignés et à l'aide d'écrous 11 prévus au niveau de chaque plaque pour un serrage sur la précédente. Les oreilles 8 sont décalées angulairement pour permettre de placer l'épaisseur d'un écrou 11 entre deux plaques successives P1 séparées par une plaque P2, ou entre deux plaques P2 séparées par une plaque P1. Chaque plaque, ou disque, est maintenue serrée contre la plaque qui est au-dessous en utilisant plusieurs écrous. Les ouvertures centrales A sont circulaires, et les joints J sont des joints toriques.

Le fonctionnement du dispositif de séchage S résulte des explications qui précèdent.

Un courant d'air humide est introduit par le tube 1, pour parcourir les chambres successives 5 en série et sortir par le tube 1e en un courant d'air sec propre à être soumis à des analyses.

La dessiccation est effectuée de manière efficace, sans altérer la teneur en autres gaz, notamment en COV de l'air.

Le dispositif selon l'invention permet la dessiccation d'un courant d'air humide afin d'empêcher la condensation d'eau et par conséquent des pertes de composés polaires, et permet d'éviter des défaillances de capteurs.

Le séchage du courant d'air humide est réalisé sous certaines conditions grâce au phénomène de perméation à travers les membranes polymères, notamment Nalophan, sans affecter les autres composants présents dans l'échantillon, dont les cinétiques de perméation sont plus faibles que celles de la vapeur d'eau.

Le dispositif peut être utilisé pour sécher des courants de gaz destinés à diverses applications telles que : chromatographies, échantillons d'air, piles à combustible. L'invention permet de sécher un courant de gaz humide sans affecter les autres composants présents dans le courant, tels que : ammoniac, benzène, toluène, méthanol, etc

Le temps de séjour de l'échantillon à l'intérieur du dispositif de séchage doit être suffisamment élevé pour permettre la perméation de l'eau, et suffisamment court pour empêcher la perméation des autres composants.

Le dispositif doit procurer une surface suffisante pour rendre possible le plus haut degré de transfert de masse d'eau.

Selon des expériences exécutées en laboratoire, qui ont permis de calculer le temps de séjour et le taux de perméation d'eau, au moyen de la méthode des taux initiaux, et en prenant en compte que le débit d'air doit être de 15 ml/min, une conception type de micro-réacteur a été proposée. Les principaux paramètres sont donnés ci-après :

| | |
|---|---|
| Surface requise | 2550 cm$^2$ |
| Volume intérieur (somme des chambres A) | 900 cm$^3$ |
| Géométrie | cylindrique |
| Nombre d'étages | 5 |
| Rayon | 9.01 cm |
| Epaisseur de disque | 0.71 cm |

Les orifices d'entrée 5a et de sortie 5b des chambres 5 sont notamment réalisés en acier inoxydable, dont la surface a été rendue inerte avec un revêtement approprié, notamment un dépôt de silane ou de polysilane (Sulfinert/Siltek). Les tubes 1a,... 1d, reliant les chambres en série, sont notamment réalisés en polytétrafluoroéthylène.

Alors que le courant d'air humide passe à travers les chambres A, son humidité est enlevée et transférée aux chambres B par le phénomène de perméation selon l'équation suivante :

$$\frac{dn_A}{dA} = k\Delta C = k(C_w - C_{w0})$$

$$k = \frac{D_w}{\delta}$$

dans laquelle

- $dn_A/dA$ = variation de la teneur en eau par unité de temps et de surface (g/s.cm$^2$)
- $k$ = une constante (cm/min) dépendant de :

  $D_w$ = diffusivité (cm$^2$ par min)
  $\delta$ = épaisseur de la couche limite (cm)
  $C_w$ = concentration de la vapeur d'eau dans l'air (g/cm$^3$)
  $C_{wo}$ = concentration de vapeur d'eau dans l'environnement des chambres B (g/cm$^3$)

$Dw$ dépend de la température et $\delta$ dépend du débit de gaz. $C_{wo}$ est considéré comme négligeable car les chambres B sont remplies de silica gel qui est un puissant absorbeur d'eau de sorte que la différence entre $C_w$ et $C_{wo}$ peut être considérée comme étant maximale tout le temps.

En utilisant le dispositif de séchage de l'invention, environ 90-95 % d'élimination de l'humidité peuvent être réalisés sur un courant dynamique d'air dans des conditions d'humidité environnementales difficiles (40-45°C et 100 % d'humidité relative).

Le dispositif de séchage ou de dessiccation selon l'invention peut être utilisé dans un dispositif de prélèvement d'échantillons de gaz tel que celui décrit à propos des figures suivantes. Ce dispositif de séchage peut bien entendu être utilisé pour d'autres applications.

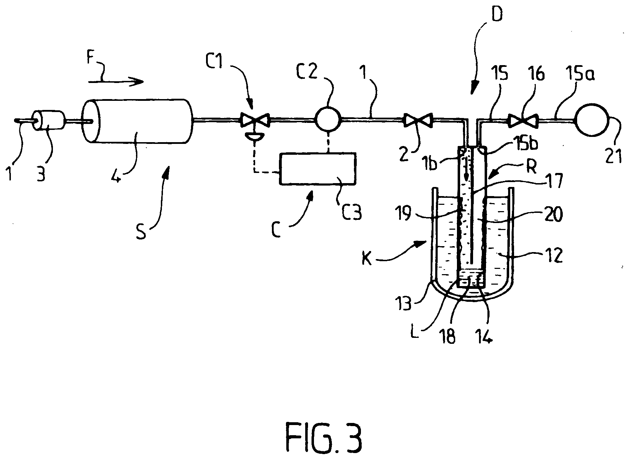

Fig. 3 illustre l'utilisation du dispositif de séchage S dans un dispositif D de prélèvement d'échantillon de gaz dans un environnement, en particulier dans l'atmosphère. Le tube de prélèvement 1 conduit à un récipient R de stockage de l'échantillon. Une vanne 2, disposée sur le tube 1 en amont du récipient R, constitue un moyen de fermeture du récipient R après un prélèvement.

Dans la section amont du tube 1, le filtre 3 est disposé pour retenir des particules solides éventuellement présentes dans l'échantillon de gaz à prélever. Ce filtre 3 peut être prévu pour retenir des particules dont la dimension est égale ou supérieure à 7 μm (sept micromètres).

Le moyen de dessiccation 4, qui est disposé sur le tube 1 en aval du filtre 3 et en amont du récipient R, permet d'éliminer l'humidité de l'échantillon, sans affecter les autres composants de cet échantillon, même les composants polaires.

Un régulateur C du débit de gaz prélevé est disposé sur le tube 1 en aval du moyen de dessiccation 4. Le régulateur C comprend une vanne C1 à débit réglable, un débitmètre C2 installé sur le tube 1 en aval de la vanne C1, et une unité de contrôle C3 reliée au débitmètre C2 pour en recueillir les informations sur le débit. L'unité de contrôle C3 compare le débit mesuré à une valeur de consigne entrée dans l'unité C3 et commande, par une liaison appropriée, la vanne C1 pour maintenir le débit à la valeur souhaitée.

La vanne 2 est installée sur le tube 1 en aval du débitmètre C2. Le tube 1 se prolonge en aval de la vanne 2 pour déboucher par un orifice d'entrée 1b dans le récipient R.

Un moyen de refroidissement K est prévu pour refroidir le récipient de stockage R à une température suffisamment basse pour condenser sous forme liquide ou solide au moins les composants gazeux notamment les COV (composés organiques volatils), autres que l'azote et l'oxygène, à analyser dans l'échantillon.

Avantageusement, le moyen de refroidissement K est constitué par un bain 12 d'azote liquide contenu dans un vase isolant thermique, notamment un vase Dewar 13. Le récipient R est plongé dans le bain 12 et sera ci-après désigné par le terme « condenseur ». Le condenseur R est enfoncé dans le bain 12 selon une profondeur au moins égale à la moitié de sa hauteur. Le vase 13 a été schématiquement illustré et les moyens de maintien du condenseur R relativement au vase 13 ne sont pas représentés. Toutefois, l'ensemble est réalisé selon une unité qui peut être déplacée et transportée sans risque de déversement de l'azote liquide.

Le condenseur R peut être de forme cylindrique d'axe parallèle à l'axe géométrique du vase 13. A titre indicatif et non limitatif, le diamètre extérieur du condenseur R peut être de l'ordre de 5 cm, et sa hauteur de l'ordre de 50 cm. Lors du prélèvement, l'axe géométrique du condenseur R est vertical.

Le condenseur R est réalisé en métal, notamment en acier inoxydable ou en titane pour éviter des réactions avec le gaz prélevé susceptibles d'altérer l'échantillon. Pour réduire encore plus le risque de réaction, il est avantageux de revêtir la face intérieure 14 de la paroi du condenseur R par une couche de protection, notamment un dépôt de polytétrafluoroéthylène (PTFE), ou un dépôt de silane ou de polysilane (SULFINER/SILTEK).

Un deuxième tube 15 part d'un orifice de sortie 15b, en haut du condenseur R, pour permettre le prélèvement de l'échantillon à analyser. Une vanne 16 est disposée sur le tube 15 qui se prolonge par une branche 15a en aval de la vanne 16.

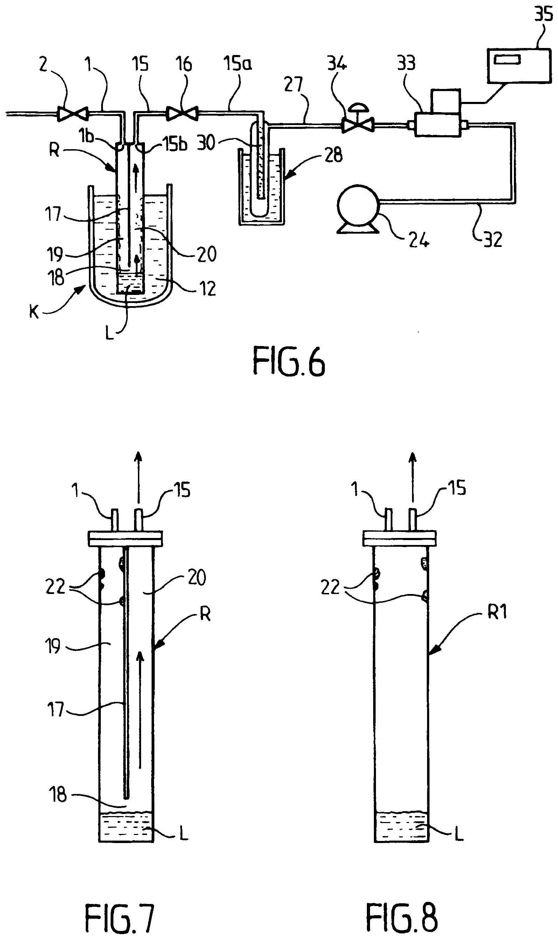

Il a été observé que les COV (composés organiques volatils) ont tendance à se condenser sous forme solide par exemple en écailles ou en gouttelettes 22 (Fig.7 et 8) dans la partie supérieure du condenseur. Au contraire, l'azote et l'oxygène se condensent en phase liquide L et tombent dans le fond du condenseur.

Avantageusement, le condenseur R comporte une cloison interne 17 s'étendant suivant un diamètre de la section du tube. La cloison 17 sépare, en partie haute, les orifices 1b, 15b. Le bord inférieur de la cloison 17 se trouve à distance au-dessus du fond du condenseur R de sorte qu'un passage inférieur 18 existe entre les deux chambres 19, 20, de section droite semi-circulaire, déterminées par la cloison 17. La chambre 19 dans laquelle arrive et se condense l'échantillon est séparée de la chambre 20 par laquelle est évacué l'échantillon, de sorte que le risque d'entraînement de COV condensés par l'azote ou l'oxygène gazeux est diminué.

Le prélèvement d'un échantillon de gaz s'effectue de la manière suivante.

Le dispositif de prélèvement D est installé sur le site où le prélèvement doit avoir lieu. Les deux vannes 2, 16 sont fermées.

Avant le prélèvement proprement dit, on peut mettre sous vide le condenseur R. Une telle mise sous vide initiale permet, d'une part, d'évacuer l'air du condenseur R qui pourrait légèrement modifier la composition de l'échantillon prélevé et, d'autre part, de faciliter le début du prélèvement. Pour cette opération de mise sous vide initiale, la branche 15a est reliée à une pompe à vide 21 et la vanne 16 est ouverte alors que la vanne 2 reste fermée. Lorsqu'un degré de vide suffisant a été obtenu dans le condenseur R, la vanne 16 est refermée et la pompe à vide 21 est arrêtée et séparée de la branche 15a.

Le débit d'entrée souhaité pour le gaz est affiché dans l'unité de contrôle C3 et le prélèvement proprement dit débute alors par ouverture de la vanne 2.

Le condenseur R est en dépression du fait qu'il est maintenu à basse température, à savoir la température de liquéfaction de l'azote sous pression atmosphérique, soit -196°C. Cette dépression est accentuée si une mise sous vide initiale a été effectuée. Un débit de gaz de l'atmosphère s'écoule, par aspiration naturelle, dans le tube 1 et se dirige vers le condenseur R où il est condensé.

L'azote et l'oxygène de l'air se condensent sous forme liquide L en partie inférieure du condenseur R de sorte qu'une dépression est maintenue dans le condenseur. Les autres composants gazeux prélevés se condensent sous forme liquide ou sous forme de blocs solides tels que 22 (Fig. 7) contre les parois du condenseur R. C'est le cas notamment pour certains composés organiques volatils (COV), sources d'odeurs.

La condensation de l'échantillon prélevé permet de stocker, sous un volume réduit, un échantillon de gaz important.

Au début du prélèvement, la dépression est relativement élevée dans le condenseur R et l'aspiration est forte, de sorte que la vanne réglable C1 est placée par l'unité C3 dans une position d'étranglement maximum pour freiner l'aspiration et établir le débit à la valeur souhaitée. Au fur et à mesure que le condenseur R se remplit de liquide et que l'aspiration devient moins forte l'unité de contrôle C3 commande progressivement l'ouverture de la vanne C1. A la fin du prélèvement la vanne 2 est fermée, la vanne 16 restant fermée.

Le dispositif D de l'invention permet de prélever, sur un site, un échantillon gazeux en continu sur plusieurs jours, notamment cinq à sept jours, avec un débit de prélèvement constant. L'échantillon représente alors une moyenne exacte des événements qui se sont produits pendant la durée de prélèvement. Bien entendu, le dispositif D permet des prélèvements sur un temps plus court, par exemple un jour ou quelques heures.

La condensation des gaz prélevés permet de conserver l'échantillon en évitant des réactions susceptibles d'altérer la composition de l'échantillon entre le moment du prélèvement et le moment de l'analyse.

L'échantillon de gaz ainsi prélevé est stocké sous des conditions cryogéniques, ce qui assure sa stabilité et permet un transport de longue durée. Il est ainsi possible de collecter des échantillons en des endroits éloignés du laboratoire d'analyse sans risque de dégradation et/ou de réaction des composés de l'échantillon.

Pour reconstituer l'échantillon, sans altérer ses composants, en vue d'une analyse par olfactométrie et/ou par chromatographie en phase gazeuse, ou par toute autre méthode analytique, on procède comme suit.

L'unité de mesure est l'unité d'odeur européenne par mètre cube $OU_E/m3$. La concentration d'odeur se mesure en déterminant le facteur de dilution requis pour atteindre le seuil de détection. La concentration d'odeur au seuil de détection est par définition de 1 $OU_E/m3$. La concentration d'odeur s'exprime ensuite en termes de multiples du seuil de détection. L'étendue de mesure va en général de $10^1$ OU$_E$/m3 à $10^7$ OU$_E$/m3 (y compris la prédilution).

Deux cas sont à envisager, notamment pour des prélèvements d'échantillons en vue d'analyser les COV ou les odeurs.

**Premier cas**

L'échantillon a été prélevé près d'une source d'émission d'odeurs et, par conséquent, la concentration en odeurs de l'échantillon est présumée élevée, notamment supérieure à 100 OU$_E$/m$^3$. Dans de telles conditions, il n'est pas nécessaire de concentrer les gaz lors de la reconstitution afin de pouvoir effectuer l'analyse.

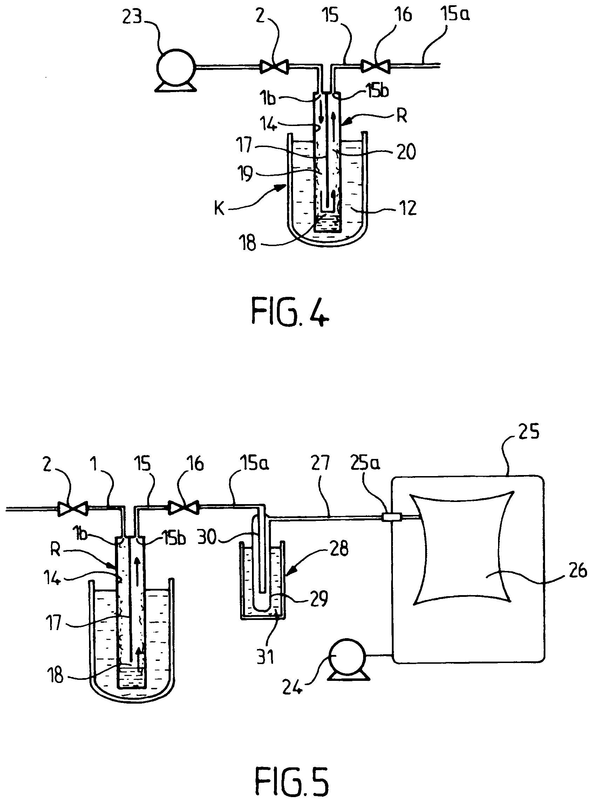

La reconstitution peut alors être exécutée en échauffant l'échantillon, dans le condenseur R, par un balayage avec de l'air ou de l'azote à la température ambiante comme illustré sur Fig. 4. Pour cela, une pompe à air 23 est reliée au tube 1 en amont de la vanne 2. Les vannes 2 et 16 sont ouvertes et un sac ou récipient analogue (non représenté) est relié à la tubulure 15a pour recueillir le gaz prélevé et l'air de balayage. L'échantillon est alors reconstitué sous un volume plus important que le volume initial, ce qui correspond à une dilution de l'échantillon dans le gaz de balayage inerte.

En variante, au lieu de balayer le condenseur R par un gaz, on assure le réchauffement de ce condenseur R, par exemple à la température ambiante, on maintient la vanne 2 fermée et on ouvre la vanne 16, le gaz prélevé étant recueilli à la sortie de la tubulure 15a. Le réchauffement peut être obtenu en sortant du bain 12, en partie ou totalement, le condenseur R.

**Deuxième cas**

L'échantillon a été prélevé dans les environs, à distance, d'une source d'émission et la concentration en odeurs de l'échantillon est présumée inférieure à 30 OU$_E$/m$^3$.

Lorsque l'échantillon prélevé présente une concentration en COV ou odeurs relativement faible, pour effectuer la mesure il est souhaitable de concentrer les composés organiques volatils de l'échantillon qui sont à l'origine des odeurs.

On procède alors, comme illustré sur Fig. 5, à une distillation sous vide de l'échantillon.

Sans retirer le condenseur 2 du bain d'azote liquide, les composés les plus volatils de l'échantillon, à savoir l'azote et l'oxygène, sont contraints à l'évaporation sous l'effet d'un vide créé par une pompe à vide 24. La pompe 24 est reliée à une chambre à vide 25 à parois rigides dans laquelle est disposé un sac 26 en matière souple, par exemple en membrane polymérique PET telle que celles connues sous les dénominations commerciales « Nalophan » ou en PVF (polyfluorure de vinyle) telle que celles connues sous les dénominations commerciales « Tedlar® ». Le sac 26 est relié à un tube 27 qui traverse de manière étanche la paroi de la chambre 25 par un raccord 25a. Le tube 27, à son extrémité éloignée du sac 26, est raccordé à la sortie d'un piège froid 28. Le piège froid 28 comprend une enveloppe cylindrique 29 dont l'extrémité supérieure est reliée au tube 27. Cette enveloppe 29 est fermée à son extrémité inférieure et est traversée de manière étanche, à son extrémité supérieure, par un tube plongeur vertical 30 raccordé à la branche 15a. Le tube plongeur 30 s'arrête à distance du fond de l'enveloppe 29, laquelle est plongée dans un bain 31 de refroidissement, notamment d'azote liquide.

La reconstitution de l'échantillon par distillation sous vide avec concentration des composés organiques volatils s'effectue comme suit.

Au début de l'opération, les vannes 2 et 16 sont fermées. La pompe à vide 24 est mise en marche pour créer un vide suffisant dans la chambre 25.

La vanne 16 est ensuite ouverte, et l'échantillon se trouvant dans le condenseur R est exposé à un vide relatif qui provoque l'évaporation de l'azote et de l'oxygène de l'échantillon. Les autres composés organiques volatils de l'échantillon, dont la température de liquéfaction est supérieure à celle de l'azote et de l'oxygène, restent sous forme condensée.

Toutefois, une fraction de ces COV peut être entraînée par l'azote et/ou l'oxygène qui s'évapore. Cette fraction de COV sera alors condensée dans le piège froid 28.

Après extraction de l'azote et de l'oxygène de l'échantillon, ce dernier est concentré en COV et peut être restitué par balayage avec un gaz à température ambiante ou par réchauffement du condenseur R et du tube 30 en les sortant de leur bain de refroidissement.

La distillation peut être effectuée selon une technique de pseudo-flash basée sur des impulsions pression-expansion, de sorte qu'à chaque impulsion, le condenseur R est mis sous pression avec de l'air ou de l'azote, sous une pression déterminée, optimale pour le système, suivie d'une brutale expansion, par chute de la pression. Il est ainsi possible d'assurer une restitution très élevée des COV.

Pour déterminer le moment où la distillation doit être arrêtée, alors que l'azote et l'oxygène ont été éliminés pour l'essentiel de l'échantillon, plusieurs voies sont ouvertes comme exposé ci-après.

Une première voie consiste à se baser sur la teneur en oxygène du courant de gaz provenant de l'échantillon. Cette méthode ne peut être mise en oeuvre que lors d'opérations par séquences en raison des limites des dispositifs de mesure. Du fait que l'oxygène (température de liquéfaction : - 183°C sous pression atmosphérique) est moins volatil que l'azote (température de liquéfaction : - 196°C sous pression atmosphérique), plus la distillation sous vide progresse, plus le courant de gaz sortant s'enrichit en oxygène. L'arrêt de la distillation est commandé lorsque la teneur en oxygène du courant sortant est supérieure à une valeur déterminée, notamment 30% en volume.

Une deuxième voie consiste à mesurer le degré de vide, qui augmente rapidement lorsque l'évaporation de l'azote et de l'oxygène de l'échantillon est terminée. Un dispositif (non représenté) de mesure de la dépression est installé en aval du piège froid et en amont de la pompe à vide. L'arrêt de la distillation est commandé lorsqu'une augmentation rapide de la dépression est détectée.

Une troisième voie préférée consiste à mesurer le volume de gaz évaporés. Le volume de l'échantillon prélevé, sous pression atmosphérique et à température ambiante, est connu. L'échantillon est composé à presque 100% d'azote et d'oxygène. Lorsque le volume évaporé mesuré correspond à la presque totalité de l'échantillon, notamment à 99% du volume de l'échantillon, la distillation est arrêtée.

Fig. 6 illustre une mise en oeuvre de la troisième voie. La pompe à vide 24 est reliée par un tube 32 à un débitmètre 33, lequel est relié en amont au tube de sortie 27 du piège froid 28 par une vanne à étranglement réglable 34. Une unité 35 de contrôle et de totalisation reçoit les informations du débitmètre 33.

L'opération de récupération de l'échantillon condensé par distillation sous vide, selon Fig. 6, s'effectue dans des conditions semblables à celles décrites à propos de Fig. 5, l'unité 35 permettant de déterminer le volume de gaz évaporé, et d'arrêter la distillation lorsque la limite fixée est atteinte.

Fig. 8 est un schéma d'une variante de réalisation possible d'un condenseur R1 formé par une enveloppe cylindrique qui ne comporte pas la cloison diamétrale 17 de Fig. 7. Le condenseur R1 présente l'inconvénient suivant. Les blocs ou écailles solides 22 de composés organiques volatils peuvent se former sur la surface intérieure de la paroi du récipient R1 du côté de la sortie de ce récipient. Lorsque l'azote et l'oxygène sont extraits, notamment par distillation sous vide, le balayage exercé par les gaz contre les blocs 22 entraîne une fraction des COV, de sorte que la composition de l'échantillon qui sera ensuite reconstitué s'en trouve altérée.

Un tel inconvénient ne se produit pas avec un condenseur R tel que celui de Fig. 7, mais la solution de Fig. 8 reste acceptable.

Quelle que soit la variante adoptée, la solution de l'invention permet de prélever un échantillon de gaz pendant une période déterminée qui peut aller de quelques heures jusqu'à sept jours, en continu, sous un volume réduit. Le transport et la reconstitution de l'échantillon peuvent s'effectuer sans altérer la composition initiale de cet échantillon, notamment lorsqu'il s'agit d'analyser les odeurs de l'échantillon.

L'invention n'est pas limitée à l'analyse des odeurs et peut s'appliquer à tout prélèvement d'échantillon de gaz.

## Revendications

1. Dispositif de séchage d'un gaz, en particulier d'air, pouvant contenir divers composés gazeux, le séchage devant permettre d'extraire la majeure partie de la vapeur d'eau présente dans le gaz, sans éliminer certains des autres composés présents, ou sans en modifier la teneur, comprenant au moins une chambre (5), avec une entrée (5a) pour un courant de gaz à traiter et une sortie (5b) pour le courant de gaz traité, cette chambre étant limitée par au moins une membrane (6) dont la perméabilité à la vapeur d'eau est nettement supérieure à sa perméabilité à l'égard des autres gaz ou vapeurs, un matériau absorbant l'humidité étant disposé, ou circulant, contre la membrane (6) du côté opposé à la chambre, la surface de la chambre et de la membrane étant déterminée, en tenant compte du débit de gaz et de sa teneur présumée en vapeur d'eau, pour assurer une dessiccation suffisante du courant de gaz entre l'entrée et la sortie du dispositif, **caractérisé en ce qu'**il comporte :

   - un empilage de plaques (P1, P2) munies d'ouvertures centrales (A,B), à l'exception des plaques extrêmes (B1) qui sont fermées,
   - chaque chambre (5) est formée par une ouverture centrale (A) prévue dans une plaque (P1), cette ouverture centrale (A) étant comprise entre deux membranes parallèles (6), tandis que le matériau absorbant l'humidité est prévu contre les membranes (6) du côté opposé à la chambre, un canal d'entrée de gaz (5a) et un canal de sortie (5b) traversant la paroi (P1a) de la plaque qui entoure l'ouverture centrale,
   - chaque plaque (P1) définissant une chambre (5) pour le passage du gaz est prise en sandwich entre deux plaques (P2, P3) comportant un logement (B, B1) pour le matériau absorbant l'humidité,
   - et plusieurs chambres (5) sont empilées, et reliées en série,

2. Dispositif selon la revendication 1, **caractérisé en ce que** des moyens d'étanchéité (J) sont prévus entre les différentes plaques empilées.

3. Dispositif selon la revendication 1 ou 2, **caractérisé en ce que** les plaques (P1,P2,P3) sont circulaires, sous forme de couronnes ou de disques.

4. Dispositif selon l'une quelconque des revendications précédentes, **caractérisé en ce que** cinq chambres (5) sont prévues en série.

5. Dispositif selon l'une quelconque des revendications précédentes, **caractérisé en ce que** les plaques de l'empilage sont réalisées en matière plastique, en particulier en polytétrafluoroéthylène.

6. Dispositif selon l'une quelconque des revendications précédentes, **caractérisé en ce que** la membrane (6) est constituée par une membrane polymérique, en particulier en polyéthylène-téréphtalate.

7. Dispositif selon la revendication 6, **caractérisé en ce que** la membrane (6) est constituée par une membrane en polyéthylène-téréphtalate .

8. Dispositif selon l'une quelconque des revendications précédentes, **caractérisé en ce que** le matériau absorbant l'humidité est formé par du silica gel.

9. Dispositif selon l'une quelconque des revendications 1 à 8, **caractérisé en ce que** le matériau absorbant l'humidité comprend un gaz sec en circulation.

10. Dispositif selon l'une quelconque des revendications précédentes, **caractérisé en ce que** l'empilage de plaques est maintenu assemblé à l'aide de moyens de serrage (V), les plaques (P1, P2) comportant, sur leur périphérie, des oreilles (8) en saillie radiale traversées par des trous (9), le maintien de l'empilage étant obtenu à l'aide de vis traversant des trous (9) alignés

11. Dispositif selon la revendication 10, **caractérisé en ce que** les oreilles (8) sont décalées angulairement pour permettre de placer l'épaisseur d'un écrou entre deux plaques (P1), définissant une chambre pour le passage du gaz, séparées par une plaque (P2) comportant un logement pour le matériau absorbant l'humidité, ou entre deux plaques (P2) comportant un logement pour le matériau absorbant l'humidité séparées par une plaque (P1) définissant une chambre pour le passage du gaz.

12. Utilisation du dispositif de séchage d'un gaz, en particulier d'air, selon l'une quelconque des revendications précédentes, dans un dispositif de prélèvement d'échantillon de gaz dans un environnement, en particulier pour une analyse des COV ou des odeurs, pendant une période de temps déterminée, **caractérisée en ce que** :

   - ledit dispositif de séchage de gaz (S) étant disposé sur le tube de prélèvement (1), en amont du récipient de stockage (R),
   - et un moyen de refroidissement (K) du récipient de stockage est prévu pour refroidir et maintenir le récipient à une température suffisamment basse pour condenser, sous forme liquide et/ou solide, au moins les composants gazeux à analyser dans l'échantillon, le récipient (R) constituant un condenseur.

13. Utilisation selon la revendication 12, **caractérisée en ce que** le moyen de refroidissement (K) est formé par un bain (12) d'azote liquide, le condenseur (R) étant plongé dans le bain.

14. Utilisation selon la revendication 12 ou 13, **caractérisée en ce que** le condenseur (R) est réalisé en métal sous une forme cylindrique.

15. Utilisation selon la revendication14, **caractérisée en ce que** le condenseur (R) est réalisé en acier inoxydable ou en titane.

16. Utilisation selon la revendication 14 ou 15, **caractérisée en ce que** la face intérieure de la paroi du condenseur (R) est revêtue d'une couche de protection constituée d'un dépôt de polytétrafluoroéthylène , ou d'un dépôt de silane.

17. Utilisation selon l'une quelconque des revendications 12 à 16, **caractérisée en ce que** le condenseur (R) comporte une cloison interne (17) s'étendant suivant un diamètre de la section du condenseur, la cloison (17) séparant, en partie haute, l'orifice d'arrivée (1b) et l'orifice de sortie (15b), le bord inférieur de la cloison se trouvant à distance au-dessus du fond du condenseur de sorte qu'un passage inférieur (18) existe entre deux chambres (19, 20) déterminées par la cloison (17), l'axe géométrique du condenseur (R) étant vertical lors du prélèvement.

18. Utilisation selon l'une quelconque des revendications 12 à 17, **caractérisée en ce qu'**un régulateur (C) du débit de gaz prélevé est disposé sur le tube de prélèvement (1) pour maintenir le débit sensiblement constant pendant toute la durée de prélèvement.

19. Utilisation selon la revendication 18, **caractérisé en ce que** le régulateur (C) comprend une vanne (C1) à débit réglable, un débitmètre (C2) installé sur le tube (1) en aval de la vanne (C1), et une unité de contrôle (C3) reliée au débitmètre (C2) pour en recueillir les informations sur le débit, l'unité de contrôle (C3) commandant, par une liaison appropriée, la vanne (C1) pour maintenir le débit à la valeur souhaitée, le dispositif étant prévu pour permettre un prélèvement continu pendant une durée pouvant aller jusqu'à sept jours.

20. Procédé pour la restitution d'un échantillon de gaz prélevé tel que décrit dans les revendications 12 à 19, et dont l'odeur est à analyser, **caractérisé en ce que** :

- dans le cas d'un échantillon prélevé à proximité d'une source d'émission d'odeurs, la reconstitution est effectuée par échauffement de l'échantillon à la température ambiante, l'échantillon étant restitué sous son volume initial, ou dilué sous un plus grand volume,
- dans le cas d'un échantillon prélevé à distance d'une source d'émission d'odeurs, la reconstitution comporte une étape de concentration des composés volatils autres que l'azote et l'oxygène.

21. Procédé selon la revendication 20, **caractérisé en ce que**, dans le cas d'un échantillon prélevé à distance d'une source d'émission d'odeurs, l'étape de concentration des composés volatils autres que l'azote et l'oxygène comprend une distillation sous vide pour évaporation de l'azote et de l'oxygène.

22. Procédé selon la revendication 21, **caractérisé en ce que** les composés organiques volatils éventuellement balayés par l'azote et l'oxygène évaporés sont condensés dans un piège froid (28).

23. Procédé selon la revendication 21 ou 22, **caractérisé en ce que** la distillation est effectuée selon une technique basée sur des impulsions pression-expansion, de sorte qu'à chaque impulsion, le condenseur (R) est mis sous pression avec de l'air ou de l'azote, sous une pression déterminée, optimale pour le système, suivie d'une brutale expansion, par chute de la pression.

24. Procédé selon l'une des revendications 21 à 23, **caractérisé en ce que** la distillation sous vide est arrêtée lorsque le volume évaporé mesuré correspond à la presque totalité, en particulier 99%, du volume de l'échantillon prélevé.

**Patentansprüche**

1. Ein Dispositiv zur Gastrocknung, insbesondere von Luft, die verschiedene gashaltige Mischungen enthalten kann. Die Trocknung sollte die Extraktion des Großteils des Dampfes, der im Gas enthalten ist, ermöglichen, ohne gewisse andere vorhandene Komponenten zu eliminieren oder ihren Inhalt zu modifizieren. Die Vorrichtung umfasst mindestens eine Behandlungskammer (5) mit einem Einlass (5a) zur Behandlung des Gases sowie einen Auslass (5b) für den behandelten Gas-Strom. Wobei die Kammer durch mindestens eine Membran (6) begrenzt ist, dessen Wasserdampfdurchlässigkeit deutlich höher über der Permeabilität in Hinsicht der anderen Gase oder der Wasserdämpfe liegt. Ein Feuchte absorbierendes Material ist auf der entgegengesetzten Seite der Behandlungskammer gegen die Membran (6) angeordnet oder zirkuliert. Die Oberfläche der Behandlungskammer sowie die der Membran wird in Berücksichtigung der Gasdurchflussmenge und der mutmaßlichen Wasserdampfmenge festgelegt, um die Trocknung des Gasstroms zwischen dem Einlass und des Auslass des Dispositivs zu gewährleisten, **dadurch gekennzeichnet, dass**:

- die Plattenstapel (P1, P2) mit zentralen Öffnungen (A, B) versehen sind und mit Ausnahme des äußersten Platten (B1) die geschlossen sind,
- jede Behandlungskammer (5) durch eine Zentralöffnung (A) definiert wird, die in einer Platte vorgesehen ist (P1); diese Zentralöffnung (A) liegt zwischen zwei parallelen Membranen (6), wohingegen das die Feuchte absorbierende Material kontra die Membranen (6) vorgesehen ist; gegenüberliegend der Behandlungskammer befindet sich ein Gaseintrittskanal (5a) sowie ein Gasaustrittskanal (5b), der die Wandung der Platte (P1a), die die Zentralöffnung umgibt, durchquert,

- jede Platte (P1) eine Behandlungskammer (5) für das Durchströmen des Gases definiert und sich in Sandwichanordnung zwischen den verschiedenen Plattenstapeln (P2, P3) befindet sowie einen Gehäuse-Bereich (B, B1) für das die Feuchte absorbierende Material enthält,
- mehrere Behandlungskammern (5) miteinander in Reihe geschaltet gestapelt sind,

2. Dispositiv gemäß Anspruch 1, **dadurch gekennzeichnet, dass** die Dichtungsmittel (J) zwischen den verschiedenen Stapelplatten vorgesehen sind.

3. Dispositiv gemäß Anspruch 1 oder 2, **dadurch gekennzeichnet, dass** die Platten (P1, P2, P3) in Form von Kronen oder Scheiben kreisförmig sind.

4. Dispositiv gemäß einer der jeglichen oben genannten Ansprüche, **dadurch gekennzeichnet, dass** fünf Behandlungskammern (5) in Serien vorgesehen sind.

5. Dispositiv gemäß einer der jeglichen oben genannten Ansprüche, **dadurch gekennzeichnet, dass** die Stapelplatten aus Kunststoff hergestellt sind, vornehmlich aus Polytetrafluoräthylen.

6. Dispositiv gemäß einer der jeglichen oben genannten Ansprüche, **dadurch gekennzeichnet, dass** die Membran (6) aus einer Polymer-Membran besteht, vornehmlich aus Polyethylenterephthalat.

7. Dispositiv gemäß Anspruch 6, **dadurch gekennzeichnet, dass** die Membran (6) aus einer Polyethylenterephthalat-Membran besteht.

8. Dispositiv gemäß einer der jeglichen oben genannten Ansprüche, **dadurch gekennzeichnet, dass** das die Feuchte absorbierende Material auf einer Silica-Gel-Basis hergestellt ist.

9. Dispositiv gemäß einer der jeglichen oben genannten Ansprüche 1 bis 8, **dadurch gekennzeichnet, dass** das die Feuchte absorbierende Material ein zirkulierendes Trockengas enthält.

10. Dispositiv gemäß einer der jeglichen oben genannten Ansprüche, **dadurch gekennzeichnet, dass** die Stapelplatten mittels Spannmitteln zusammengehalten sind (V); die Platten (P1, P2) sind auf ihrem Umfang mit radial vorstehenden Ansätzen (8) versehen, die durch eine Lochung perforiert werden (9); die Aufrechterhaltung der Stapelung wird mit Hilfe von den die fluchtenden Bohrungen (9) durchdringenden Schrauben erlangt.

11. Dispositiv gemäß Anspruch 10, **dadurch gekennzeichnet, dass** die Ansätze (8) winkelig versetzt sind, um die Positionierung einer Schraubenmutterstärke zwischen den zwei Platten (P1) zu ermöglichen, welche eine Behandlungskammer für den Gasdurchfluss definiert; die Abtrennung erfolgt durch eine Platte (P2) die einen Gehäuse-Bereich für das die Feuchte absorbierende Material enthält oder zwischen zwei Platten (P2), die einen Gehäuse-Bereich für das die Feuchte absorbierende Material enthalten. Die Separation erfolgt durch eine Platte (P1), die einen Gehäuse-Bereich für den Gasdurchfluss definiert.

12. Verwendung des Dispositivs zur Gastrocknung, vornehmlich von Luft, gemäß einer der jeglichen oben genannten Ansprüche, in einem Dispositiv für Gasprobenentnahmen im Milieu, insbesondere für eine VOC- oder Geruchs-Analyse in einem bestimmten Zeitraum, **dadurch gekennzeichnet, dass**:

- das besagte Dispositiv zur Gastrocknung (S) auf dem Proberöhrchen (1) stromauf vom Vorrats-Gefäß (R) angeordnet ist,
- und ein Kühlmittel (K) des Vorrats-Gefäßes zur Kühlung vorgesehen ist, um den Behälter bei einer Temperatur zu halten, die für die Kondensation ausreichend niedrig ist; entweder in flüssiger und/oder in fester Form, um zumindest die gasförmigen Komponenten in der Probeentnahme zu analysieren; das Vorrats-Gefäß (R) bildet den Kondensator.

13. Verwendung gemäß Anspruch 12, **dadurch gekennzeichnet, dass** das Kühlmittel (K) aus flüssigem Stickstoff (12) besteht; der Kondensator (R) ist ins Bad eingetaucht.

14. Verwendung gemäß Anspruch 12 oder 13, **dadurch gekennzeichnet, dass** der Kondensator (R) in zylindrischer Form aus Metall ausgeführt ist.

**15.** Verwendung gemäß Anspruch 14, **dadurch gekennzeichnet, dass** der Kondensator (R) aus Edelstahl oder Titan ausgeführt ist.

**16.** Verwendung gemäß Anspruch 14 oder 15, **dadurch gekennzeichnet, dass** die Innenseite der Wandung des Kondensators (R) mit einer Schutzschicht ausgekleidet ist, die aus einem Belag aus Polytetrafluoräthylen oder Silan besteht.

**17.** Dispositiv gemäß einer der jeglichen oben genannten Ansprüche 12 bis 16, **dadurch gekennzeichnet, dass** der Kondensator (R) eine Innenwand (17) umfasst, die sich je nach dem Diameter der Kondensator-Sektion ausweitet. Die Innenwand (17) trennt an der Oberseite die Zutritts-Öffnung (1b) sowie die Auslassöffnung (15b); der Unterrand der Innenwand befindet sich distanziert über dem Boden des Kondensators, sodass eine Unterführung (18) zwischen zwei Behandlungskammern (19, 20) existiert, die von der Trennwand (17) erschlossen wird. Die geometrische Achse des Kondensators (R) ist anlässlich der Probeentnahme senkrecht.

**18.** Verwendung gemäß einer der jeglichen oben genannten Ansprüche 12 bis 17, **dadurch gekennzeichnet, dass** ein Regulator (C) des entnommenen Gasdurchsatzes sich auf dem Proberöhrchen (1) befindet, um den Durchfluss während der gesamten Dauer der Probeentnahme wesentlich konstant aufrechtzuerhalten.

**19.** Verwendung gemäß Anspruch 18, **dadurch gekennzeichnet, dass** der Regulator (C) ein Ventil (C1) mit einstellbarer Durchflussregelung enthält. Ein Durchfluss-Sensor (C2), der auf dem Rohr (1) stromab von dem Ventil (C1) angebracht ist und eine Steuereinheit (C3) umfasst, die mit dem Sensor verbunden ist (C2), um die Durchflussangaben zu erfassen. Die Steuereinheit (C3) ordert mit entsprechender Verknüpfung das Ventil (C1), um den Durchfluss zum gewünschten Wert aufrechtzuerhalten. Das Dispositiv ist vorgesehen, um eine kontinuierliche Probeentnahme während einer Dauer von bis zu sieben Tagen zu ermöglichen.

**20.** Verfahren für die Wiedergabe eines Samples entnommenen Gases, wie in den Ansprüchen 12 bis 19 beschrieben, dessen Geruch zu analysieren ist, **dadurch gekennzeichnet, dass**:

   - im Falle einer naheliegenden Geruchs-Emissionsquelle entnommenen Probe die Rekonstitution durch eine Erwärmung der Probeentnahme zu Raumtemperaturen vorgenommen wird. Die Probeentnahme wird im Ausgangsvolumen restituiert oder nimmt verdünnt ein größeres Volumen ein,
   - im Falle einer Probeentnahme, die entfernt von Geruchs-Emissionsquellen entnommen wird, die Rekonstitution eine Konzentrationsstufe mit von Stickstoff und Sauerstoff unterschiedlichen flüchtigen Verbindungen enthält.

**21.** Verfahren gemäß Verfahren 20, **dadurch gekennzeichnet, dass** im Falle einer Probeentnahme, die entfernt von Geruchs-Emissionsquellen entnommen wird; die Konzentrationsstufe mit von Stickstoff und Sauerstoff unterschiedlichen flüchtigen Verbindungen zum Zweck der Verdampfung von Stickstoff und Sauerstoff zur Vakuum-Destillation unterworfen wird.

**22.** Verfahren gemäß Verfahren 21, **dadurch gekennzeichnet, dass** die flüchtigen organischen Verbindungen, die eventuell durch den verdunsteten Stickstoff und den Sauerstoff weggefegt werden, in einer Kältefalle (28) kondensieren.

**23.** Verfahren gemäß Verfahren 21 oder 22, **dadurch gekennzeichnet, dass** die Destillation gemäß einer Technik basierend auf Druck-Expansions-Impulsen durchgeführt wird, sodass bei jedem Impuls der Kondensator (R) mit Luft oder Stickstoff vorbestimmt zur Systemoptimierung unter Druck gesetzt wird. Es folgt abrupte Expansion durch Druckverlust.

**24.** Verfahren gemäß Verfahren 21 bis 23, **dadurch gekennzeichnet, dass** die Vakuum-Destillation anhält, wenn das gemessene verdunstete Volumen fast ganzheitlich dem Volumen, vornehmlich zu 99%, der entnommenen Probe entspricht.

**Claims**

**1.** A device for drying a gas, in particular air, which may contain various gaseous compounds, the drying having to make it possible to extract most of the water vapor present in the gas, without removing some of the other compounds present, or without modifying the content thereof, comprising at least one chamber (5), with an inlet (5a) for a gas flow to be treated and an outlet (5b) for the treated gas flow, this chamber being limited by at least one membrane (6), the water vapor permeability of which is substantially greater than its permeability with respect to other gases or vapors, a moisture-absorbing material being positioned, or circulating, against the membrane (6) on the side opposite the chamber, the surface area of the chamber and of the membrane being determined, by taking into account the flow rate of gas and its assumed water vapor content, in order to ensure sufficient desiccation of the gas flow between the inlet and the outlet of the device, **characterized in that** it comprises:

- a stack of plates (P1, P2) provided with central openings (A, B), except for the outermost plates (B1) which are closed,
- each chamber (5) is formed by a central opening (A) provided in a plate (P1), this central opening (A) being between two parallel membranes (6), whilst the moisture-absorbing material is provided against the membranes (6) on the side opposite the chamber, a gas inlet channel (5a) and an outlet channel (5b) passing through the wall (P1a) of the plate which surrounds the central opening,
- each plate (P1) defining a chamber (5) for the passage of the gas is sandwiched between two plates (P2, P3) comprising a housing (B, B1) for the moisture-absorbing material,
- and several chambers (5) are stacked, and connected, in series.

2. The device as claimed in claim 1, **characterized in that** sealing means (J) are provided between the various stacked plates.

3. The device as claimed in claim 1 or 2, **characterized in that** the plates (P1, P2, P3) are circular, crown-shaped or disk-shaped.

4. The device as claimed in any one of the preceding claims, **characterized in that** five chambers (5) are provided in series.

5. The device as claimed in any one of the preceding claims, **characterized in that** the plates of the stack are made of plastic, in particular of polytetrafluoroethylene.

6. The device as claimed in any one of the preceding claims, **characterized in that** the membrane (6) is constituted by a polymer membrane, in particular a polyethylene terephthalate membrane.

7. The device as claimed in claim 6, **characterized in that** the membrane (6) is constituted by a membrane made of polyethylene terephthalate.

8. The device as claimed in any one of the preceding claims, **characterized in that** the moisture-absorbing material is formed by silica gel.

9. The device as claimed in any one of claims 1 to 8, **characterized in that** the moisture-absorbing material comprises a circulating dry gas.

10. The device as claimed in any one of the preceding claims, **characterized in that** the stack of plates is held together using clamping means (V), the plates (P1, P2) comprising, on their periphery, radially protruding lugs (8) through which holes (9) pass, the stack being held using screws that pass through the aligned holes (9).

11. The device as claimed in claim 10, **characterized in that** the lugs (8) are angularly offset in order to make it possible to place the thickness of a nut between two plates (P1), defining a chamber for the passage of the gas, separated by a plate (P2) comprising a housing for the moisture-absorbing material, or between two plates (P2) comprising a housing for the moisture-absorbing material separated by a plate (P1) defining a chamber for the passage of the gas.

12. A use of a device for drying a gas, in particular air, as claimed in any one of the preceding claims, to a device for collecting a sample of gas in an environment, in particular for an analysis of the VOCs or of the odors, over a given time period, **characterized in that**:

- the gas drying device (S) is positioned in the collection tube (1), upstream of the storage vessel (R),
- and a storage vessel cooling means (K) is provided in order to cool and maintain the vessel at a low enough temperature to condense, in liquid and/or solid form, at least the gaseous components to be analyzed in the sample, the vessel (R) constituting a condenser.

13. The use as claimed in claim 12, **characterized in that** the cooling means (K) is formed by a bath (12) of liquid nitrogen, the condenser (R) being immersed in the bath.

14. The use as claimed in claim 12 or 13, **characterized in that** the condenser (R) is made from metal in a cylindrical form.

15. The use as claimed in claim 14, **characterized in that** the condenser (R) is made of stainless steel or of titanium.

16. The use as claimed in claim 14 or 15, **characterized in that** the inner face of the wall of the condenser (R) is coated with a protective layer constituted of a deposition of polytetrafluoroethylene, or of a deposition of silane.

17. The use as claimed in any one of claims 12 to 16, **characterized in that** the condenser (R) comprises an inner partition (17) that extends along a diameter of the cross section of the condenser, the partition (17) separating, in the upper portion, the inlet orifice (1b) and the outlet orifice (15b), the lower edge of the partition being at a distance above the bottom of the condenser so that a lower passage (18) exists between two chambers (19, 20) determined by the partition (17), the geometric axis of the condenser (R) being vertical during the collection.

18. The use as claimed in any one of claims 12 to 17, **characterized in that** a regulator (C) of the flow rate of gas collected is positioned in the collection tube (1) in order to keep the flow rate substantially constant throughout the collection time.

19. The use as claimed in claim 18, **characterized in that** the regulator (C) comprises an adjustable flow rate valve (C1), a flow meter (C2) installed in the tube (1) downstream of the valve (C1), and a control unit (C3) connected to the flow meter (C2) in order to recover information on the flow rate therefrom, the control unit (C3) controlling, via a suitable connection, the valve (C1) in order to keep the flow rate at the desired value, the device being provided in order to enable a continuous collection over a period which may range up to seven days.

20. A process for the restitution of a gas sample collected as described in any one of claims 12 to 19, the odor of which is to be analyzed, **characterized in that**:

   - in the case of a sample collected in proximity to an odor emission source, the reconstitution is carried out by warming the sample to ambient temperature, the sample being restituted in its initial volume, or diluted in a larger volume,
   - in the case of a sample collected at a distance from an odor emission source, the reconstitution comprises a step of concentrating the volatile compounds other than nitrogen and oxygen.

21. The process as claimed in claim 20, **characterized in that**, in the case of a sample collected at a distance from an odor emission source, the step of concentrating volatile compounds other than nitrogen and oxygen comprises a vacuum distillation in order to evaporate the nitrogen and the oxygen.

22. The process as claimed in claim 21, **characterized in that** the volatile organic compounds possibly purged by the evaporated nitrogen and oxygen are condensed in a cold trap (28).

23. The process as claimed in claim 21 or 22, **characterized in that** the distillation is carried out according to a technique based on pressure-expansion pulses, so that at each pulse, the condenser (R) is pressurized with air or nitrogen, under a given pressure, which is optimal for the system, followed by a sudden expansion, via a drop in the pressure.

24. The process as claimed in one of claims 21 to 23, **characterized in that** the vacuum distillation is stopped when the evaporated volume measured corresponds to almost all, in particular 99%, of the collected sample volume.

FIG.1

FIG.2

FIG.3

FIG. 4

FIG.5

FIG.6

FIG.7

FIG.8

**RÉFÉRENCES CITÉES DANS LA DESCRIPTION**

**Documents brevets cités dans la description**

- US 20060021615 D1
- US 3735559 D2